# EUROPÄISCHE PATENTANMELDUNG

(11) **EP 2 169 373 A2**
(43) Veröffentlichungstag der Anmeldung: **31.03.2010**
(21) Anmeldenummer: 09170246.4
(22) Anmeldetag: 15.09.2009
(51) Int. Cl.: G01L 13/02, G01L 19/04, G01L 9/04

(54) **Drucksensor zur Differenzdruckmessung**

(30) Priorität: 26.09.2008 DE 102008049143
(71) Anmelder: Metallux AG, 71404 Korb (DE); Intelligente Sensorsysteme Dresden GmbH, 01109 Dresden (DE)
(72) Erfinder: Karaus, Andreas, 88138, Hergensweiler (DE); Kralik, Thomas, 71404, Korb (DE); Sager, Karsten, 01239, Dresden (DE)
(74) Vertreter: BRP Renaud & Partner

(57) **Zusammenfassung**

Die vorliegende Erfindung betrifft einen Drucksensor (1) zur Differenzdruckmessung, mit einem Grundkörper (2), der an einem axialen Ende eine Membran (3) aufweist, und mit einer auf die Membran (3) aufgedruckten Dehnmessschaltung (8).

Die Nutzbarkeit des Drucksensors (1) lässt sich verbessern durch einen Rohrkörper (12), der an einem axialen Ende fest mit dem Grundkörper (2) und/oder mit der Membran (3) verbunden ist, der zum Anschließen eines Schlauchs (13) und/oder eines Rohrs geeignet ist und der so dimensioniert ist und so am Grundkörper (2) und/oder an der Membran (3) angeordnet ist, dass zumindest ein Messbereich (14) der Dehnmessschaltung (8) mit einem Innenraum (15) des Rohrkörpers (12) fluidisch verbunden ist.

## Beschreibung

Die vorliegende Erfindung betrifft einen Drucksensor zur Differenzdruckmessung mit den Merkmalen des Oberbegriffs des Anspruchs 1, sowie ein zugehöriges Herstellungsverfahren.

Ein derartiger Drucksensor ist beispielsweise aus der DE 10 2005 053 877 A1 bekannt und umfasst einen Grundkörper, der an einem axialen Ende eine Membran aufweist, sowie eine auf den Membran aufgedruckte Dehnmessschaltung. Ferner ist ein Rohrkörper vorgesehen, der an einem axialen Ende fest mit dem Grundkörper verbunden ist, der z. B. zum Anschließen eines Schlauchs geeignet ist. Der Rohrkörper ist dabei so dimensioniert und so am Grundkörper angeordnet, dass zumindest ein Messbereich der Dehnmessschaltung mit einem Innenraum des Rohrkörpers fluidisch verbunden ist. Beim bekannten Drucksensor ist der Grundkörper ein spritzgeformtes Kunststoffteil.

Aus der DE 102 52 023 B3 ist ein Drucksensor bekannt, der einen als Ringkörper ausgestalteten Grundkörper aufweist, dessen zentrale Öffnung an einem axialen Ende mit einer Membran verschlossen ist. An einer von der Zentralöffnung des Ringkörpers abgewandten Seite ist auf die Membran eine polymere Dehnmessschaltung aufgedruckt. Beim bekannten Drucksensor sind Ringkörper und Membran aus einem Stück integral hergestellt, insbesondere als keramischer Monolith. Im Betrieb des Drucksensors generiert die Dehnmessschaltung Signale, die mit einer zwischen der Außenseite und einer der Zentralöffnung zugewandten Innenseite der Membran herrschenden Druckdifferenz korrelieren.

Derartige Drucksensoren werden in der Regel dazu verwendet, den Druck in einem Messraum gegenüber dem Umgebungsdruck zu messen. Hierzu wird der Drucksensor so montiert, dass die Innenseite der Membran dem Messraum ausgesetzt ist, während die Außenseite der Membran der Umgebung ausgesetzt ist. Die Messung eines Differenzdrucks zwischen zwei Messräumen ist mit dem bekannten Drucksensor grundsätzlich auch möglich. In diesem Fall ist dann die Innenseite der Membran dem ersten Messraum ausgesetzt, während die Außenseite der Membran dem zweiten Messraum ausgesetzt ist. Üblicherweise liegen die Messräume, deren Differenzdruck ermittelt werden soll, nicht unmittelbar nebeneinander, was die Verwendung des bekannten Drucksensors erschwert. Darüber hinaus können sowohl im ersten Messraum als auch im zweiten Messraum vergleichsweise aggressive Medien enthalten sein, welche die aus einer Polymer- oder Cermetpaste hergestellte Dehnmessschaltung angreifen können, was die Dauerhaltbarkeit und Standzeit des Drucksensors reduziert.

Die vorliegende Erfindung beschäftigt sich mit dem Problem, für einen Drucksensor der eingangs genannten Art eine verbesserte Ausführungsform anzugeben, die sich insbesondere dadurch auszeichnet, dass sie eine vereinfachte Differenzdruckmessung zwischen zwei Messräumen ermöglicht, die insbesondere nicht unmittelbar aneinander angrenzen und die aggressive Medien enthalten können.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Drucksensor fest mit einem Rohrkörper zu verbinden, der sich zum Anschließen eines Schlauchs und/oder eines Rohrs eignet, wobei dieser Rohrkörper so angeordnet ist, dass zumindest ein Messbereich der Dehnmessschaltung mit einem Innenraum des Rohrkörpers kommuniziert. Durch die Anbringung eines solchen Rohrkörpers kann an den Drucksensor ein Schlauch oder ein Rohr oder dergleichen angeschlossen werden, der bzw. das mit einem Messraum kommunizierend verbunden ist. Dementsprechend kann der Drucksensor mit Hilfe des daran ausgebildeten Rohrkörpers ohne weiteres dazu verwendet werden, die Druckdifferenz zwischen zwei nicht unmittelbar benachbarten Messräumen zu ermitteln. An den ersten Messraum kann der Drucksensor in gewohnter Weise angebaut werden, so dass die eine Seite der Membran unmittelbar mit dem ersten Messraum verbunden ist. Die andere Seite der Membran kann über den Rohrkörper und einen daran angeschlossenen Schlauch bzw. ein daran angeschlossenes Rohr mit dem zweiten Messraum verbunden werden. Sofern eine Drosselwirkung durch den Rohrkörper, den daran angeschlossenen Schlauch bzw. das daran angeschlossene Rohr vernachlässigbar ist, steht über diesen Verbindungspfad der im zweiten Messraum herrschende Druck an der anderen Seite der Membran an. Die erfindungsgemäße Bauweise eröffnet für den Drucksensor somit eine Vielzahl neuer Anwendungsformen, was die Brauchbarkeit und Kundenakzeptanz des Drucksensors erhöht.

Erfindungsgemäß ist der Rohrkörper durch eine Glasverbindung an der Außenseite der Membran und/oder am Grundkörper befestigt. Üblicherweise bestehen Grundkörper und Membran aus einem keramischen Werkstoff und können insbesondere als Monolith ausgestaltet sein. Ebenso kann auch der Rohrkörper aus einem keramischen Werkstoff hergestellt sein. Die Verwendung einer Glasverbindung ermöglicht eine feste und mediendichte Verbindung zwischen Rohrkörper und Membran bzw. Grundkörper, die sich außerdem durch eine extrem hohe Beständigkeit gegenüber aggressiven Medien auszeichnet.

Besonders vorteilhaft ist eine Ausführungsform, bei welcher die Dehnmessschaltung zumindest im Innenraum des Rohrkörpers mit einer Schutzschicht vor einem Kontakt mit sich im Innenraum des Rohrkörpers vorhandenen Medien geschützt ist. Dabei kann diese Schutzschicht insbesondere durch eine Glasschicht gebildet sein. Durch das Anbringen einer solchen Schutzschicht können im zweiten Messraum ohne weiteres aggressive Medien verwendet werden. Die Bestandteile der Dehnmessschaltung sind durch die Schutzschicht vor Beschädigung geschützt.

Entsprechend einer besonderen Ausführungsform können die Glasschicht zum Schützen der Dehnmessschaltung und die Glasverbindung zum Befestigen des Rohrkörpers aus dem gleichen Glaswerkstoff bestehen und insbesondere in einem gemeinsamen Arbeitsschritt hergestellt werden. Die Herstellung des Drucksensors wird dadurch extrem vereinfacht, da in einem Arbeitsgang die Schutzschicht und der Rohrkörper am übrigen Drucksensor angebracht werden können.

Gemäß einer vorteilhaften Ausführungsform kann der Grundkörper als Ringkörper ausgestaltet sein, der eine zentrale Öffnung aufweist, die an einem axialen Ende mit der Membran verschlossen ist. Hierdurch entspricht der Drucksensor hinsichtlich seines Grundkörpers einer herkömmlichen Bauweise, so dass er in einer Vielzahl bestehender Anwendungen ohne weiteres, und insbesondere ohne Anpassungsbedarf, verwendbar ist.

Entsprechend einer zweckmäßigen Weiterbildung kann die Dehnmessschaltung auf eine von der zentralen Öffnung des Ringkörpers abgewandten Außenseite der Membran aufgedruckt sein, wobei dann der Rohrkörper so am Ringkörper und/oder an der Membran angeordnet ist, dass zumindest der Messbereich der Dehnmessschaltung vom Rohrkörper eingefasst ist. Hierdurch kann auf besonders einfache Weise ein konventioneller Drucksensor zu einem erfindungsgemäßen Drucksensor umgebaut werden. Insoweit kann bei der Herstellung des erfindungsgemäßen Drucksensors auf bekannte Produkte zurückgegriffen werden, was die Herstellungskosten für den Drucksensor reduziert.

Bei einer alternativen Ausführungsform kann die Dehnmessschaltung auf eine dem Grundkörper zugewandte Innenseite der Membran aufgedruckt sein. Der Grundkörper weist dann an einer der Membran zugewandten Innenseite eine Aussparung auf, wobei zumindest der Messbereich der Dehnmessschaltung innerhalb der Aussparung angeordnet ist. Der Rohrkörper ist bei dieser Ausführungsform an einer von der Membran abgewandten Außenseite des Grundkörpers angeordnet. Ferner enthält der Grundkörper einen Verbindungskanal, über den der Innenraum des Rohrkörpers mit der Aussparung fluidisch verbunden ist. Bei dieser Bauweise ist die Dehnmessschaltung durch die Membran und den Grundkörper mehr oder weniger gekapselt und dadurch besonders gut vor Verunreinigungen und Beschädigungen geschützt. Außerdem ist der Rohrkörper bei dieser Ausführungsform hinsichtlich seiner Dimensionierung weitgehend unabhängig von der Ausdehnung der Dehnmessschaltung bzw. des Messbereichs. Ferner lässt sich der Drucksensor bei dieser Bauweise besonders einfach zu einem Absolutdrucksensor modifizieren, indem die Aussparung mit einem Referenzdruck, z.B. Vakuum, beaufschlagt und der Verbindungskanal verschlossen wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

### Es zeigen, jeweils schematisch

- Fig. 1: eine Draufsicht auf einen Drucksensor,
- Fig. 2: einen Längsschnitt des Drucksensors,
- Fig. 3: einen Längsschnitt wie in Fig. 2, jedoch bei einer anderen Ausführungsform,
- Fig. 4: eine Seitenansicht des Drucksensors in einem Einbauzustand.

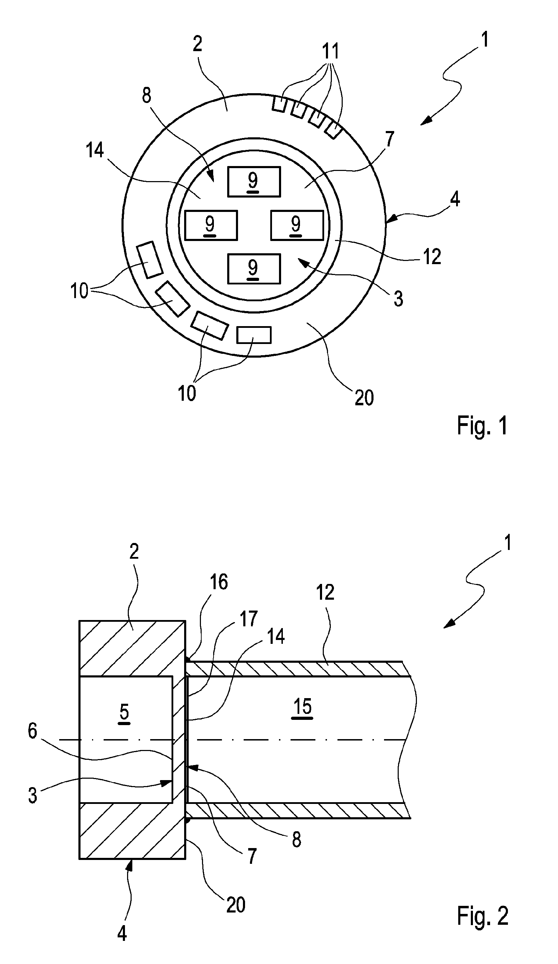

Entsprechend den Fig. 1 bis 3 umfasst ein Drucksensor 1 einen Grundkörper 2 und eine Membran 3. Ferner weist der Drucksensor 1 eine Dehnmessschaltung 8 auf, die auf eine der axialen Seiten des Drucksensors 1 aufgedruckt ist. Eine derartige Dehnmessschaltung 8 umfasst aus einer Dickschichtpaste hergestellte Widerstandselemente 9, von denen in Fig. 1 einige dargestellt sind. Die gezeigten Widerstandselemente 9 können beispielsweise eine Wheatstone-Brücke bilden. Ferner kann die Dehnmessschaltung 8 weitere Elemente umfassen, die außerhalb der Membran 3 auf den Grundkörper 2 aufgedruckt sind, beispielsweise Abgleichwiderstände 10, die ebenfalls aus einem Siebdruckmaterial bestehen können. Ferner sind hier am Grundkörper 2 an der der Membran 3 zugeordneten Seite elektrische Anschlüsse 11 zur Kontaktierung der Dehnmessschaltung 8 angebracht. Die Dehnmessschaltung 8 kann im Betrieb des Drucksensors 1 biegeelastische Verformungen der Membran 3 erfassen und damit korrelierte elektrische Signale generieren. Diese biegeelastischen Verformungen der Membran 3 können durch Druckdifferenzen zwischen einer Außenseite 7 der Membran 3 und einer Innenseite 6 der Membran 3 ausgelöst werden. Letztlich generiert somit die Dehnmessschaltung 8 elektrische Signale, die mit der zwischen Außenseite 7 und Innenseite 6 herrschenden Druckdifferenz korrelieren.

Vorzugsweise handelt es sich hier um einen keramischen Differenzdrucksensor 1, bei dem keine Polymerpasten, sondern ein Keramikmaterial, z.B. sogenannte Cermetpasten, als Schaltungsmaterial verwendet werden. Polymerpasten sind Temperaturbeständig bis max. 220°C, während die keramischen" Dickschichtpasten bei 850°C eingebrannt werden. Keramik ist aufgrund der guten Medienbeständigkeit als Material für den Differenzdrucksensor 1 bevorzugt.

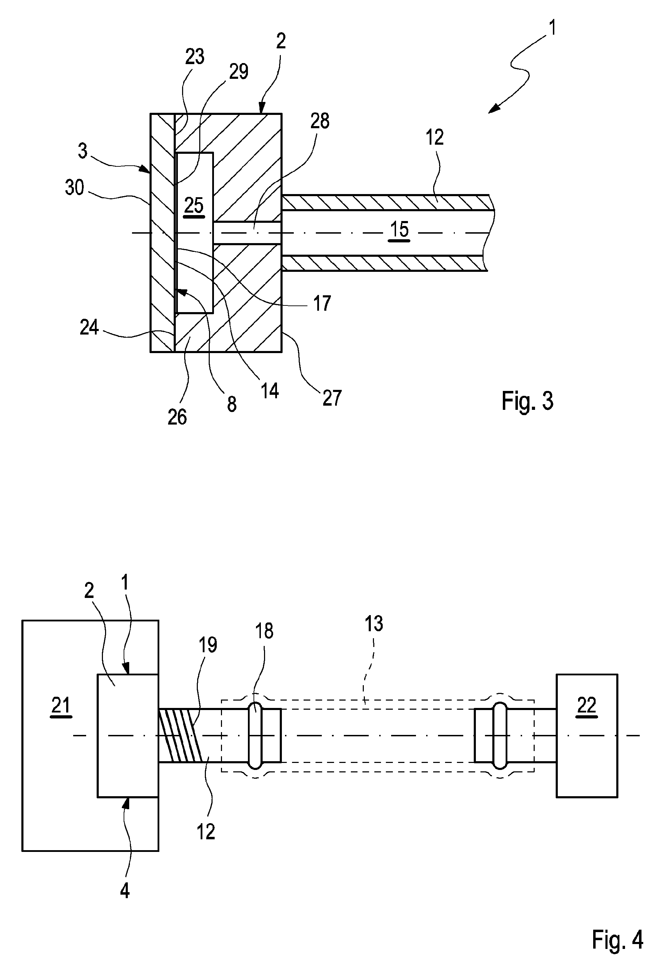

Der Drucksensor 1 weist außerdem einen Rohrkörper 12 auf. Dieser ist an einem axialen Ende des Drucksensors 1 am Grundkörper 2 und/oder an der Membran 3 befestigt. Der Rohrkörper 12 ist so ausgestaltet, dass er sich zum Anschließen eines Schlauchs und/oder eines Rohrs eignet. In Fig. 4 ist exemplarisch mit unterbrochener Linie ein an den Rohrkörper 12 angeschlossener Schlauch 13 dargestellt. Ferner ist der Rohrkörper 12 so dimensioniert und so am Grundkörper 2 bzw. an der Membran 3 angeordnet, dass zumindest ein für die Differenzdruckmessung benötigter Messbereich 14 der Dehnmessschaltung 8 mit einem Innenraum 15 des Rohrkörpers 12 kommunizierend verbunden ist.

Im Beispiel der Fig. 2 bilden Grundkörper 2 und Membran 3 einen Monolithkörper 4, der vorzugsweise aus einem keramischen Werkstoff besteht. Bei der in Fig. 3 gezeigten Ausführungsform sind der Grundkörper 2 und die Membran 3 separate Bauteile, die auf geeignete Weise aneinander befestigt sind, beispielsweise mittels einer Glasverbindung 23, bei der es sich insbesondere um eine Glaslötverbindung handeln kann.

Entsprechend Fig. 2 kann der Grundkörper 2 als Ringkörper ausgestaltet sein, der im Folgenden ebenfalls mit 2 bezeichnet wird. Der Ringkörper 2 umschließt eine zentrale Öffnung 5. Diese ist an einem axialen Ende mit der Membran 3 gasdicht bzw. mediendicht verschlossen. Die weiter oben genannte Innenseite 6 der Membran 3 ist der Zentralöffnung 5 zugewandt, während die weiter oben genannte Außenseite 7 der Membran 3 von der Zentralöffnung 5 abgewandt ist. Auf diese Außenseite 7 ist die Dehnmessschaltung 8 aufgedruckt. Bei dieser Ausführungsform ist der Rohrkörper 12 an der Außenseite 7 der Membran 3 angeordnet, und zwar so, dass er zumindest den Messbereich 14 der Dehnmessschaltung 8 umschließt.

Bei der in Fig. 3 gezeigten Ausführungsform ist der Grundkörper 2 als massiver Block ausgeführt; ebenso kann es sich auch hier um einen Ringkörper handeln. Der Grundkörper 2 weist an einer der Membran 3 zugewandten Innenseite 24 eine Aussparung 25 oder Kavität 25 auf. Diese ist im Wesentlichen zentral angeordnet und von einem mit der Membran 3 verbundenen ringförmigen Abschnitt 26 des Grundkörpers 2 in Umfangsrichtung vollständig umschlossen. Die Dehnmessschaltung 8 ist bei dieser Ausführungsform auf eine dem Grundkörper 2 zugewandte Innenseite 29 der Membran 3 aufgedruckt. Die Aussparung 25 und die Dehnmessschaltung 8 sind hinsichtlich ihrer Dimensionierung so aufeinander abgestimmt, dass die Dehnmessschaltung 8 zumindest mit ihrem Messbereich 14 innerhalb der Aussparung angeordnet ist. Der Rohrkörper 12 ist bei dieser Ausführungsform an einer von der Membran 3 abgewandten Außenseite 27 des Grundkörpers 2 angeordnet und mit diesem verbunden. Ferner enthält der Grundkörper 2 eine Verbindungskanal 28, der den Innenraum 15 des Rohrkörpers 12 mit der Aussparung 25 kommunizierend verbindet. Somit liegt der im Innenraum 15 des Rohrkörpers 12 herrschende Druck automatisch auch in der Aussparung 25 und somit auch an der Membran 3 an, und zwar an deren Innenseite 29. Durch diese indirekte Kopplung zwischen Messbereich 14 und Innenraum 15 kann der Rohrkörper 12 unabhängig von der Dimensionierung der Dehnmessschaltung 8 dimensioniert werden. Insbesondere kann sein Durchmesser - wie im Beispiel der Fig. 3 - kleiner sein als der Durchmesser der Aussparung 25 und somit auch kleiner als der Durchmesser des Messbereichs 14 sein. Hierdurch kann z.B. um den Rohrkörper 12 herum Bauraum am Grundkörper 2 geschaffen werden, der zur Anbringung weiterer Schaltungskomponenten oder dergleichen genutzt werden kann.

Vorzugsweise ist der Rohrkörper 12 mittels einer Glasverbindung 16 an der Membran 3 bzw. am Grundkörper 2 befestigt. Die Glasverbindung 16 ist dabei zweckmäßig als Glaslötverbindung ausgestaltet. Bei einer solchen Glaslötverbindung, wie sie z.B. zwischen dem Grundkörper 2 und der Membran 3 und/oder zwischen dem Rohrkörper 12 und der Membran 3 bzw. dem Grundkörper 2 verwendet wird, kommt ein Glaswerkstoff mit einer vergleichsweise niedrigen Erweichungstemperatur zur Anwendung, um die jeweilige Glasverbindung 16 bzw. 23 herzustellen. Zweckmäßig wird die Glasverbindung 16 so gestaltet, dass der Rohrkörper 12 hermetisch abgedichtet am Grundkörper 2 bzw. an der Membran 3 angebracht ist. Hierdurch kann der Innenraum 15 des Rohrkörpers 12 zur Umgebung des Drucksensors 1 mediendicht mit dem Drucksensor 1 verbunden werden. Die hier vorgeschlagene Glaslotverbindung 16 setzt insbesondere voraus, dass Grundkörper 2 und Rohrkörper 12 aus Keramik bestehen und die Dehnmessschaltung 8 aus einer keramischen Dickschichtpaste (z.B. Cermetpaste) hergestellt ist. Glaslotverbindungen 16 können bei Temperaturen grösser als 600°C hergestellt werden.

Bei den hier gezeigten, besonders vorteilhaften Ausführungsformen ist die Dehnmessschaltung 8 zumindest im Innenraum 15 des Rohrkörpers 12 bzw. in der Aussparung 25, also zumindest im Messbereich 14 mit einer Schutzschicht 17 versehen. Diese Schutzschicht 17 ist hierzu bei Fig. 2 auf die Außenseite 7 der Membran 3 und bei Fig. 3 auf die Innenseite 29 der Membran 3 aufgebracht. Die Schutzschicht 17 schützt die beschichteten Bereiche der Dehnmessschaltung 8 vor einem direkten Kontakt mit Medien, die sich im Innenraum 15 des Rohrkörpers 12 befinden können. Vorzugsweise ist die Schutzschicht 17 durch eine Glasschicht gebildet. Glas ist extrem widerstandsfähig gegenüber einer Vielzahl aggressiver Medien. Insbesondere ist Glas säurebeständig, laugenbeständig, rußfest und sogar für Wasserstoff nahezu undurchdringlich. Dementsprechend kann eine durch eine Glasbeschichtung gebildete Schutzschicht 17 einen effektiven Schutz für den beschichteten Bereich der Dehnmessschaltung 8 realisieren. Alternativ zu einer Glasschutzschicht 17 ist es auch möglich, die Schutzschicht 17 mit einem anderen medienbeständigen Material herzustellen, z.B. mit einer aufgeklebten Kunststoff-Folie, z.B. aus PEEK, oder durch eine aufgedruckte oder angespritzte Kunststoffbeschichtung.

Bevorzugt ist nun eine Ausführungsform, bei welcher die Glasschicht, also die aus Glas gebildete Schutzschicht 17 und die Glasverbindung 16 bzw. 23 aus dem gleichen Glaswerkstoff hergestellt sind. Insbesondere können somit die Schutzschicht 17 und die Glasverbindung 16 bzw. 23 im gleichen Arbeitsgang hergestellt werden.

Um den Rohrkörper 12 für das Anschließen eines Rohrs bzw. eines Schlauchs 13 auszubilden, kann der Rohrkörper 12 vorzugsweise zylindrisch ausgestaltet sein. Bei der in Fig. 4 gezeigten Ausführungsform ist der Rohrkörper 12 außerdem als Schlauchtülle ausgestaltet. Insbesondere besitzt der Rohrkörper 12 hierzu einen radial nach außen abstehenden Ringwulst 18, über den der Schlauch 13 aufgezogen werden kann. Hierdurch ergibt sich durch Kraftschluss bzw. Reibschluss eine für viele Anwendungen ausreichende Festlegung zwischen Schlauch 13 und Rohrkörper 12. Es ist klar, dass grundsätzlich auch andere Befestigungsmittel, wie zum Beispiel eine Schlauchschelle oder dergleichen, verwendet werden können.

Entsprechend Fig. 4 kann der Drucksensor 1 außerdem mit einer Heizeinrichtung 19 ausgestattet sein, mit deren Hilfe der Rohrkörper 12 beheizt werden kann. Durch Beheizen des Rohrkörpers 12 kann beispielsweise eine Kondensatbildung und insbesondere eine Vereisung des Rohrkörpers 12 vermieden werden. Die Heizeinrichtung 19 kann beispielsweise auf die Oberfläche des Rohrkörpers 12 aufgedruckt sein, beispielsweise in Form einer Heizschaltung, deren Widerstandselement insbesondere aus einem Dickschichtmaterial hergestellt sein kann. Beispielsweise kann die Heizeinrichtung 19 in Form einer außen auf den Rohrkörper 12 aufgedruckten Heizschaltung gebildet sein. In diesem Fall besteht der Rohrkörper 12 bevorzugt aus Keramik (hohe Temperaturbeständigkeit) und der Heizwiderstand 19 aus einer Widerstandspaste mit grossem positivem Temperaturkoeffizienten (sogenanntes PTC-Element), wodurch eine selbstregelnde Heizung realisierbar ist.

Entsprechend Fig. 1 besitzt die Dehnmessschaltung 8 zumindest einen, vorzugsweise mehrere Abgleichwiderstände 10. Zweckmäßig sind diese hier nicht im Innenraum 15 des Rohrkörpers 12, sondern außerhalb davon am Grundkörper 2 angeordnet. Dementsprechend befinden sich diese Abgleichwiderstände 10 hier in einer Ringzone 20, die am Grundkörper 2 bzw. an der Membran 3 den Rohrkörper 12 umschließt. Hierdurch ist es insbesondere möglich, die Dehnmessschaltung 8 nach dem Anbringen des Rohrkörpers 12 abzugleichen, da die außerhalb des Rohrkörpers 12 liegenden Abgleichwiderstände 10 relativ gut zugänglich sind. Im Innenraum 15 liegende Abgleichwiderstände 10 müssten vor dem Anbringen der Schutzschicht 17 abgeglichen werden oder vor dem Anbringen des Rohrkörpers 12 abgeglichen werden.

Im gezeigten Beispiel der Fig. 2 ist die Membran 3 ein integraler Bestandteil des Grundkörpers 2, so dass Grundkörper 2 und Membran 3 den Monolithkörper 4 bilden. Ebenso ist gemäß Fig. 3 eine Ausführungsform möglich, bei welcher die Membran 3 separat vom Grundkörper 2 hergestellt wird und zu einem späteren Zeitpunkt mit diesem fest verbunden wird.

Zweckmäßig sind auch die Anschlussstellen 11 in der Ringzone 20 angeordnet, also außerhalb des Rohrkörpers 12.

Entsprechend Fig. 4 kann der Drucksensor 1 im Einbauzustand an einem ersten Messraum 21 so montiert werden, dass eine Seite der Membran 3 (bei der Ausführungsform der Fig. 2 die Innenseite 6 und bei der Ausführungsform der Fig. 3 eine vom Grundkörper abgewandte Außenseite 30) unmittelbar dem Druck im ersten Messraum 21 ausgesetzt ist. Um nun die Druckdifferenz zwischen dem ersten Messraum 21 und einem davon beabstandet angeordneten zweiten Messraum 22 messen zu können, ist der Rohrkörper 12 über einen Schlauch 13 bzw. über ein Rohr mit besagtem zweiten Messraum 22 kommunizierend verbunden. In der Folge kann durch den Schlauch 13 bzw. durch das Rohr der im zweiten Messraum 22 herrschende Druck bis zum Innenraum 15 des Rohrkörpers 12 und somit an die andere Seite der Membran 3 (bei der Ausführungsform der Fig. 2 die Außenseite 7 und bei der Ausführungsform der Fig. 3 die Innenseite 29) transportiert werden. Somit herrscht an der anderen Seite der Membran 3 der Druck des zweiten Messraums 22. Die Membran 3 verformt sich nun in Abhängigkeit der Druckdifferenz zwischen Innenseite 6, 29 und Außenseite 7, 30. Die Dehnmessschaltung 8 kann damit korrelierte elektrische Signale generieren, die über die Anschlüsse 11 abgreifbar sind. Sowohl im ersten Messraum 21 als auch im zweiten Messraum 22 können aggressive Medien enthalten sein. Die Gefahr einer Beschädigung der an sich empfindlichen Bestandteile der Dehnmessschaltung 8 besteht dabei nicht, da an der den Medien des ersten Messraums 21 ausgesetzten Innenseite 6 (Fig. 2) bzw. Außenseite 30 (Fig. 3) keine Bestandteile der Dehnmessschaltung 8 vorhanden sind. Ferner sind die an der Außenseite 7 (Fig. 2) bzw. Innenseite 29 (Fig. 3) angeordneten Komponenten der Dehnmessschaltung 8 zumindest im Innenraum 15 bzw. in der Aussparung 25 durch die Schutzschicht 17 geschützt.

### Das Herstellen des Drucksensors 1 erfolgt zweckmäßig wie folgt:

Zunächst wird die Dehnmessschaltung 8 auf die Membran 3 und gegebenenfalls auf den Grundkörper 2 mittels Siebdruck aufgebracht. Hierbei können die üblichen Technologien zur Anwendung kommen, insbesondere Siebdruck. Nach dem Aufdrucken der Dehnmessschaltung 8 wird der Drucksensor 1 zum Aushärten der Dehnmessschaltung 8 mit einer ersten Temperatur wärmebehandelt.

Nach dem Aushärten der Dehnmessschaltung 8 wird am Grundkörper 2 und/oder an der Membran 3 ein Verbindungsmaterial, insbesondere ein zum Glaslöten geeigneter Glaswerkstoff, angebracht. Sofern außerdem eine Schutzschicht 17 aufgebracht werden soll, kann gleichzeitig zum Auftragen des Verbindungsmaterials oder vorher oder hinterher ein geeignetes Beschichtungsmaterial zumindest auf den Messbereich 14 der Dehnmessschaltung 8 aufgebracht werden. Zweckmäßig wird dabei als Beschichtungsmaterial der gleiche Glaswerkstoff verwendet wie für das Verbindungsmaterial, so dass der gleiche Werkstoff einerseits zum Verbinden und andererseits zum Beschichten dient. In diesem Fall wird eine gleichzeitige Applikation des Verbindungsmaterials und des Beschichtungsmaterials bevorzugt. Anschließend wird der Rohrkörper 12 in einer vorbestimmten Relativlage zur Membran 3 bzw. zum Grundkörper 2 positioniert. Anschließend erfolgt eine Wärmebehandlung des Drucksensors 1 mit einer zweiten Temperatur, um das Verbindungsmaterial und/oder das Beschichtungsmaterial auszuhärten. Wichtig ist hierbei, dass diese zweite Temperatur niedriger ist als die zuvor genannte erste Temperatur. Hierdurch kann eine Beschädigung der Dehnmessschaltung 8 beim Härten der Glasverbindung 16, 23 und/oder der Schutzschicht 17 vermieden werden.

Es hat sich gezeigt, dass sich die Dehnmessschaltung 8 aufgrund der zum Aushärten der Glasverbindung 16, 23 bzw. der Schutzschicht 17 durchgeführten Wärmebehandlung verstimmt, so dass ein Abgleich erforderlich ist. Sofern die Abgleichwiderstände 10, wie in Fig. 1 gezeigt, außerhalb des Rohrkörpers 12 angeordnet sind, kann dieser Abgleich ohne weiteres nachträglich durchgeführt werden. Zweckmäßig erfolgt dann vor dem Aushärten der Glasverbindung 16, 23 bzw. der Schutzschicht 17 kein Abgleich der Dehnmessschaltung 8, so dass insgesamt nur ein Abgleich erforderlich ist.

Bei einer bevorzugten Ausführungsform wird jedoch der Abgleich der Dehnmessschaltung 8 vor der Wärmebehandlung zum Aushärten der Glasverbindung 16, 23 bzw. der Schutzschicht 17 durchgeführt, und zwar derart, dass bei diesem Abgleich die Veränderung der Dehnmessschaltung 8, die bei der nachfolgenden Wärmebehandlung zum Aushärten der Glasverbindung 16, 23 bzw. der Schutzschicht 17 auftritt, bereits vorweggenommen bzw. berücksichtigt wird. Da die Wärmebehandlung zum Aushärten der Glasverbindung 16, 23 bzw. der Schutzschicht 17 reproduzierbar mit stets den gleichen Parametern durchgeführt wird, lässt sich auch die Veränderung der Dehnmessschaltung 8 durch diese Wärmebehandlung vergleichsweise genau voraussagen. Dementsprechend kann diese Veränderung bereits vor dem Durchführen dieser Wärmebehandlung beim Abgleichen der Dehnmessschaltung 8 berücksichtigt werden. Hierdurch kann insgesamt das Abgleichen der Dehnmessschaltung 8 vereinfacht werden, da die Zugänglichkeit der Abgleichwiderstände 10 bei fehlender Schutzschicht 17 und bei fehlendem Rohrkörper 12 vereinfacht ist.

Vorzugsweise ist der Grundkörper 2 kreisförmig gestaltet. Der Rohrkörper 12 besteht vorzugsweise aus einem keramischen Werkstoff, insbesondere aus dem gleichen Keramikwerkstoff wie der Grundkörper 2 und/oder die Membran 3 bzw. der Monolith 4. Grundsätzlich kann der Rohrkörper 12 auch aus einem beliebigen anderen Material hergestellt werden, z.B. Metall oder Kunststoff und auf geeignete Weise befestigt und abgedichtet werden.

## Patentansprüche

1. Drucksensor zur Differenzdruckmessung,
- mit einem Grundkörper (2), der an einem axialen Ende eine Membran (3) aufweist,
- mit einer auf die Membran (3) aufgedruckte Dehnmessschaltung (8),
- mit einem Rohrkörper (12), der an einem axialen Ende fest mit dem Grundkörper (2) und/oder mit der Membran (3) verbunden ist, der zum Anschließen eines Schlauchs (13) und/oder eines Rohrs geeignet ist und der so dimensioniert ist und so am Grundkörper (2) und/oder an der Membran (3) angeordnet ist, dass zumindest ein Messbereich (14) der Dehnmessschaltung (8) mit einem Innenraum (15) des Rohrkörpers (12) fluidisch verbunden ist,
**dadurch gekennzeichnet,**
**dass** der Rohrkörper (12) durch eine Glasverbindung (16) an der Membran (3) und/oder am Grundkörper (2) befestigt ist.

2. Drucksensor nach Anspruch 1,
**dadurch gekennzeichnet,**
**dass** die Dehnmessschaltung (8) zumindest im Innenraum (15) des Rohrkörpers (12) mit einer Schutzschicht (17) vor einem Kontakt mit im Innenraum (15) des Rohrkörpers (12) vorhandenen Medien geschützt ist.

3. Drucksensor nach Anspruch 2,
**dadurch gekennzeichnet,**
**dass** die Schutzschicht (17) durch eine Glasschicht gebildet ist.

4. Drucksensor nach Anspruch 3"
**dadurch gekennzeichnet,**
**dass** die Glasschicht (17) und die Glasverbindung (16) aus dem gleichen Glaswerkstoff hergestellt sind.

5. Drucksensor nach einem der Ansprüche 1 bis 4,
**dadurch gekennzeichnet,**
**dass** der Rohrkörper (12) hermetisch abgedichtet am Grundkörper (2) und/oder an der Membran (3) befestigt ist.

6. Drucksensor nach einem der Ansprüche 1 bis 5,
**dadurch gekennzeichnet,**
**dass** der Grundkörper als Ringkörper (2) ausgestaltet ist, der eine zentrale Öffnung (5) aufweist, die an einem axialen Ende mit der Membran (3) verschlossen ist.

7. Drucksensor nach Anspruch 6,
**dadurch gekennzeichnet,**
**dass** die Dehmessschaltung (8) auf eine von der zentralen Öffnung (5) des Ringkörpers (2) abgewandten Außenseite (7) der Membran (3) aufgedruckt ist, wobei der Rohrkörper (12) so am Ringkörper (2) und/oder an der Membran (3) angeordnet ist, dass zumindest der Messbereich (14) der Dehnmessschaltung (8) vom Rohrkörper (12) eingefasst ist.

8. Drucksensor nach einem der Ansprüche 1 bis 6,
**dadurch gekennzeichnet,**
- **dass** die Dehnmessschaltung (8) auf eine dem Grundkörper (2) zugewandte Innenseite der Membran (3) aufgedruckt ist,
- der Grundkörper an einer der Membran (3) zugewandten Innenseite (24) eine Aussparung (25) aufweist,
- **dass** zumindest der Messbereich (14) der Dehnmessschaltung (8) innerhalb der Aussparung (25) angeordnet ist,
- **dass** der Rohrkörper (12) an einer von der Membran (3) abgewandten Außenseite (27) des Grundkörpers (2) angeordnet ist,
- **dass** der Grundkörper (2) einen Verbindungskanal (28) enthält, über den der Innenraum (15) des Rohrkörpers (12) mit der Aussparung (25) fluidisch verbunden ist.

9. Drucksensor nach einem der Ansprüche 1 bis 8,
**dadurch gekennzeichnet,**
**dass** der Rohrkörper (12) zylindrisch und/oder als Schlauchtülle ausgestaltet ist

10. Drucksensor nach einem der Ansprüche 1 bis 9, **gekennzeichnet durch** eine Heizeinrichtung (19) zum Beheizen des Rohrkörpers (12).

11. Drucksensor nach Anspruch 10,
**dadurch gekennzeichnet,**
**dass** die Heizeinrichtung (19) eine am Rohrkörper (12) angebrachte, insbesondere aufgedruckte, Heizschaltung aufweist.

12. Drucksensor nach einem der Ansprüche 1 bis 11,
**dadurch gekennzeichnet,**
**dass** die Dehnmessschaltung (8) wenigstens einen Abgleichwiderstand (10) aufweist, der sich am Grundkörper (2) und/oder an der Membran (3) in einer den Rohrkörper (12) umschließenden Ringzone (20) befindet.

13. Drucksensor nach einem der Ansprüche 1 bis 12,
**dadurch gekennzeichnet,**
- **dass** die Membran (3) integraler Bestandteil des Grundkörpers (2) ist, oder
- **dass** die Membran (3) an den Grundkörper (2) angebaut ist, insbesondere mittels einer Glasverbindung.

14. Verfahren zum Herstellen eines Drucksensors (1) nach einem der Ansprüche 1 bis 13,
- bei dem die Dehnmessschaltung (8) auf die Außenseite (7) der Membran (3) mittels Siebdruck aufgebracht wird,
- bei dem der Drucksensor (1) zum Aushärten der Dehnmessschaltung (8) mit einer ersten Temperatur wärmebehandelt wird,
- bei dem der Rohrkörper (12) mit einem Verbindungsmaterial zum Erzeugen einer Glasverbindung (16) an der Membran (3) und/oder am Grundkörper (2) angebracht wird,
- bei dem der Drucksensor zum Aushärten des Verbindungsmaterials mit einer zweiten Temperatur wärmebehandelt wird, die kleiner ist als die erste Temperatur.

15. Verfahren nach Anspruch 14,
**dadurch gekennzeichnet,**
- **dass** gleichzeitig oder vor oder nach dem Anbringen des Verbindungsmaterials ein Beschichtungsmaterial zumindest auf einen Messbereich (14) der Dehnmessschaltung (8) aufgebracht wird, das zusammen mit dem Verbindungsmaterial durch die mit der zweiten Temperatur durchgeführte Wärmebehandlung ausgehärtet wird, und/oder
- **dass** die Dehnmessschaltung (8) mittels wenigstens eines Abgleichwiderstands (10) der Dehnmessschaltung (8) vor der Wärmebehandlung zum Aushärten des Verbindungsmaterials und soweit vorhanden des Beschichtungsmaterials so abgeglichen wird, dass eine bei der Wärmebehandlung zum Aushärten des Verbindungsmaterials und soweit vorhandenes Beschichtungsmaterials auftretende Veränderung der Dehnmessschaltung (8) bereits berücksichtigt wird.
